## Europäisches Patentamt
## European Patent Office
## Office européen des brevets

(19)

(11) Publication number: **0 019 083**
**B1**

(12)

# EUROPEAN PATENT SPECIFICATION

(45) Date of publication of patent specification: **15.06.83**

(51) Int. Cl.³: **G 11 B 5/54** //G11B5/60

(21) Application number: **80101916.7**

(22) Date of filing: **10.04.80**

(54) Magnetic head-mounting-assemblies.

(30) Priority: **07.05.79 US 36614**

(43) Date of publication of application:
**26.11.80 Bulletin 80/24**

(45) Publication of the grant of the patent:
**15.06.83 Bulletin 83/24**

(84) Designated Contracting States:
**DE FR GB IT SE**

(56) References cited:
**DE - B - 1 042 257**
**FR - A - 1 043 503**
**US - A - 3 268 877**
**US - A - 3 612 775**
**US - A - 3 812 535**
**US - A - 3 936 881**
**US - A - 4 141 049**

(73) Proprietor: **International Business Machines Corporation**
**Armonk, N.Y. 10504 (US)**

(72) Inventor: **Watrous, Robert Bringhurst**
**7208 Golf Course Lane**
**San Jose California 95139 (US)**

(74) Representative: **Lewis, Alan John**
**IBM United Kingdom Patent Operations Hursley Park**
**Winchester, Hants, S021 2JN (GB)**

Courier Press, Leamington Spa, England.

## Magnetic head-mounting-assemblies

The invention relates to assemblies for mounting magnetic heads, particularly the so-called flying magnetic heads used in disc files, and to magnetic disc files.

In a magnetic disc file a magnetic head arm assembly is employed for radially accessing different data tracks of the rotating magnetic disc and is subject to variable forces that will vary the spatial position of the head transducing gap relative to a data track on the disc that is being scanned.

For example, heads that access different tracks on the surface of a magnetic disc and that start and stop in contact with the rotating disc experience undesirable radial and circumferential forces. Frictional drag is generated while stopping or starting the disc, thereby producing circumferential forces that affect head performance. In order to maintain wear of the head and the disc within practical limits, the head load and the frictional drag are maintained low. As a result, the largest forces that are experienced by the head suspension are the radial accessing forces.

In view of the variations in the topography of the disc surface, and in order to have the magnetic transducer closely follow the disc surface at a constant spacing and attitude, it is desirable to minimize the effects of radial and circumferential forces that are applied to the head carrying arm. It would be highly advantageous to achieve flexibility of movement for the roll and pitch of the magnetic transducer, of the slider to which it is joined, and of the flexure or supporting suspension for the slider, while realizing rigidity against radial, circumferential and yaw motions.

U.S. specification No. 3,612,775 (Miller) describes an assembly for mounting a magnetic head from a frame support so as to permit go-and-return movement of the head towards and away from a record. The Miller assembly comprises a mounting element on which the head is to be mounted, an elongate flexible cantilevered arm carrying the mounting element at its free end, a carrier element to which the other end of the cantilevered arm is secured and a positioning arm on which the carrier element is mounted.

In the Miller assembly the mounting element is a slack fit in an aperture through the wall of a tubular element forming the carrier element and is carried via a ball-joint connection by the free end of a leaf spring. A head mounted on the Miller mounting element is therefore urged towards a record surface by the leaf spring. As the leaf spring flexes about its root, the head is moved in an arc but since the mounting element can tilt on its ball-joint connection the head is able, within limits, to remain in recording contact with the record. The carrier element is secured e.g. welded to the free end of the positioning arm so that the element is moved in an arc towards and away from recording medium by movement of the arm.

The Applicants have appreciated that there are substantial disadvantages in such arcuate movements and, although Miller purports to compensate for such movements, they are better avoided. It is therefore an object of the Applicants invention to provide an improved magnetic head mounting assembly in which the head moves in a substantially linear path towards and away from the record.

Accordingly, the invention provides an assembly for mounting a magnetic head from a frame support so as to permit go-and-return movement of the head towards and away from a record, said assembly comprising a mounting element on which the head is to be mounted, an elongate flexible cantilevered arm carrying the mounting element at or adjacent its free end, a carrier element to which the other end of the cantilevered arm is secured and a positioning arm on which the carrier element is mounted, characterised in that the carrier element is a sliding fit in a guide passage in the positioning arm and slides linearly therein in the manner of a piston without rotation during go-and-return movement of the head and in that the carrier element and the positioning arm are interconnected by a spring device which flexes during such sliding movement.

An assembly for mounting a magnetic head, embodying the invention, will now be described by way of example with reference to the accompanying drawings, in which:—

Figures 1 and 2 are explanatory representations of prior art structures;

Figures 3 and 4 are top and side views of the mounting assembly, embodying the invention;

Figure 5 is a side view of the mounting assembly, shown in relation to magnetic storage discs and a head actuator; and

Figure 6 is an exploded view showing the components utilized in the head mounting assembly of this invention.

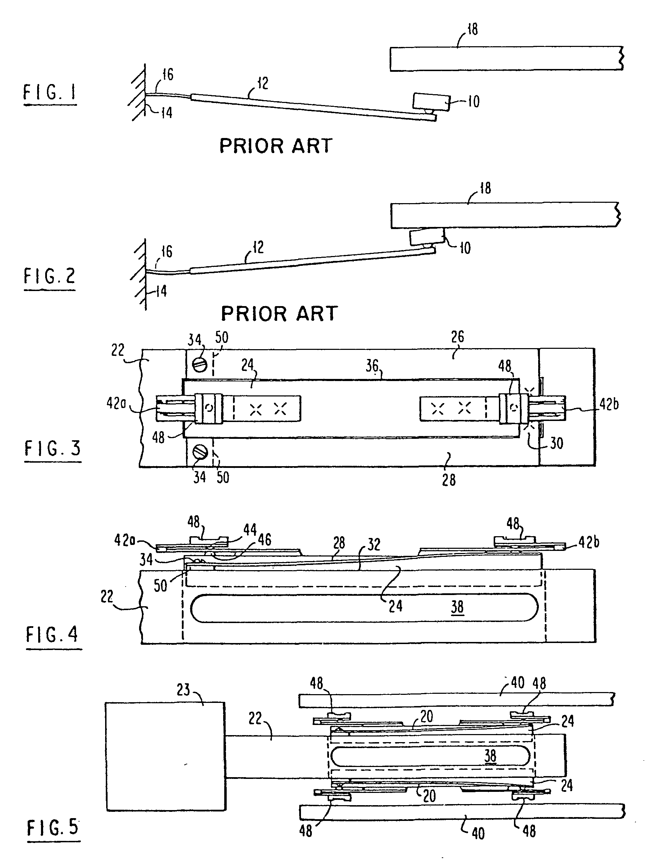

With reference to Figures 1 and 2, which are representational illustrations of prior art head mounting assemblies or suspensions, a magnetic head 10 is shown attached to a rigid load beam 12. The beam 12 is coupled to an arm structure 14 through a hinge spring 16. In Figure 1, the head 10 is shown in an unloaded position relative to a magnetic disk 18, which is stationary prior to operation of a disk drive.

In Figure 2, the head 10 is shown loaded to the disc 18, which is rotating during the read and write modes of the disc drive. It is noted that the attitude of the head relative to the disc is such that there is no parallel relation between the surfaces of the head and disc. This non-parallelism will adversely affect signal resolu-tion and amplitude, and may cause head crashes.

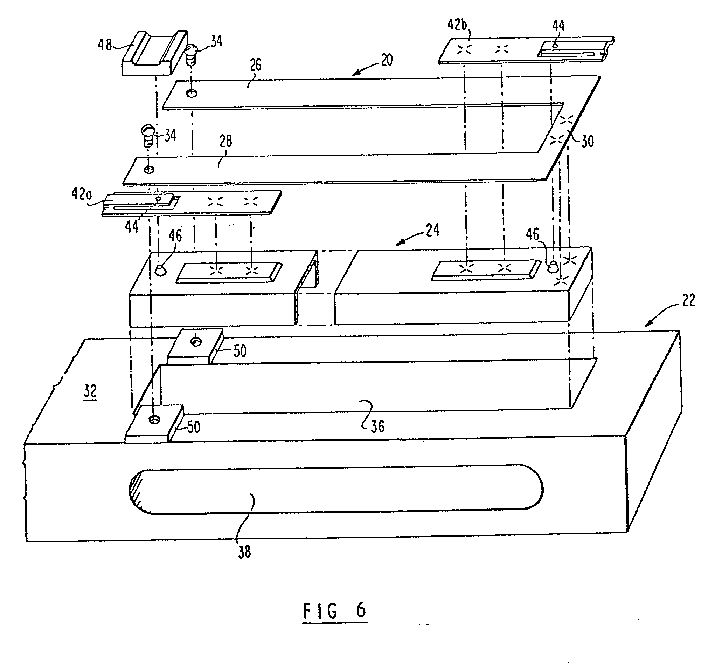

In accordance with the invention as depicted in Figures 4, 5, and 6, a flexible spring 20 (Figure 6) is attached to an arm 22 and to a load beam 24. The spring 20 is formed with two legs 26 and 28 and a connecting portion 30, and is generally C-shaped, or in an open rectangular form. The flexible spring may be made from a thin, flat stainless steel and is joined, by spot welding for example, at its connecting portion 30 to the top surface of the load beam 24. The ends of the legs 26 and 28 of the spring 20 are connected to the adjacent surface 32 of the arm 22, by clamping screws 34, by way of example. Apertured spacers 50 which accommodate the screws 34 are provided between the surface 32 of the arm 22 and legs 26, 28 of the spring 20.

As depicted in Figure 6, the arm 22 is configured as a hollow box, made of relatively light material such as aluminum. The arm 22 may be connected to an actuator 23, (Figure 5) such as a voice coil motor, for accessing different data tracks, or may be stationary and supporting a fixed head relative to an associated data track. The arm 22 has a recess 36 formed in the surface 32 into which the load beam 24 is seated. The load beam is formed in a box-like configuration, and is made of stainless steel, for example. The geometry of the load beam is such that clearance is minimal between the walls of the box-like beam and the walls of the arm recess, thereby minimizing air leakage, yet allowing the beam to move up and down relative to the depth of the recess 36.

The head mounting assembly shown in Figures 3 and 4 permits go-and-return movement of the head towards and away from a magnetic record. The arm 22 and beam 24 provide relatively movable rigid structural parts interconnected through the spring device 20. The beam 24 is a sliding fit in the guide passage provided by the aperture entrance in the wall of the arm 22 leading to recess 36. The close fit causes the beam 24 to slide linearly in the manner of a piston in a cylinder and prevents rotation of the beam in the plane of the aperture entrance. Thus, the head mounting assembly of Figures 3 and 4 minimise undesirable radial, circumferential and yaw motion of the head.

The arm 22 has a slot or second aperture 38 formed in its side, which allows air to be drawn into the interior of the hollow arm when an adjacent disc 40 is rotating. The air entering the slot 38 provides an aerodynamic force for loading the beam towards the surface of the rotating disc 40.

Flexures 42a, b are attached to each end of the load beam 24, by spot welding for example, to form cantilevered arms. Each of the flexures 42 has a dimple or button-like protuberance 44 that contacts the flat top of respective raised pedestals 46 disposed on the surface of the load beam. The dimple 44 and pedestal 46 form a pivot point for the flexure to allow pitch and roll to occur while the head is following the variations in the disc surface.

Air bearing head sliders 48 (only one shown in Figure 6) are bonded to the center of each flexure 42a, b. Each slider supports a magnetic transducer having a transducing gap at the air bearing surface of the slider for transducing action with the rotating magnetic disc.

With the configuration disclosed herein, a force applied transversely to the length of the load beam and spring, will cause the load beam to move in the direction of the force without any rotational effects. In this way, the structures including the flexures and heads on either side of the centerline will move together, towards and away from a rotating disk, in a plane that is substantially parallel to the plane of the rotating disc, surface facing the heads. The force for moving the load beam and heads to the disc may be the air pressure generated by the rotating disc and transmitted through the arm slot and applied to the load beam; or a mechanically applied force. By virtue of this novel design, head crashes are minimized and reliability is improved.

## Claims

1. An assembly for mounting a magnetic head from a frame support so as to permit go-and-return movement of the head towards and away from a record, said assembly comprising a mounting element (48) on which the head is to be mounted, an elongate flexible cantilevered arm (42a, Figure 6) carrying the mounting element at or adjacent its free end, a carrier element (24) to which the other end of the cantilevered arm (42) is secured and a positioning arm (22) on which the carrier element (24) is mounted, characterised in that the carrier element (24) is a sliding fit in a guide passage (36) in the positioning arm (22) and slides linearly therein in the manner of a piston without rotation during go-and-return movement of the head and in that the carrier element (24) and the positioning arm (22) are interconnected by a spring device (20) which flexes during such sliding movement.

2. An assembly as claimed in claim 1, further characterised in that the spring device (20, Figure 6) comprises a generally U-shaped leaf spring having two spaced legs (26, 28) and a cross-member (30), the free ends of the legs being secured (50) to the positioning arm (22) and the cross-member (30) being secured to the carrier element.

3. An assembly as claimed in claim 1 or 2, further characterised in that the guide passage (36) is provided by a recess or aperture formed in the positioning arm.

4. An assembly as claimed in claim 3, further characterised in that the positioning arm (22) is of rectangular cross-sectional shape and has an

*air inlet aperture (38) formed in it which* registers with the guide recess or aperture (36) so that, in use, air enters the guide recess or aperture (36) through the air inlet aperture (38) and urges the carrier element (24) outwardly of the guide recess or aperture (36).

5. An assembly as claimed in claim 3 or 4, further characterised in that the guide recess or aperture (36) extends right through the positioning arm (22), in that a second carrier element (Figure 5) slides, as aforesaid, in the other end of the through recess or aperture, and in that a second flexible cantilevered arm and mounting block are carried by the second carrier element whereby two heads, working on opposed recording surfaces can be mounted.

6. An assembly as claimed in any one of claims 1 to 5, further characterised in that the or each mounting block (24, Figure 6) carries two flexible cantilevered arms (42a, 42b), each carrying a mounting element (48) and arranged so that the two head mounting elements are disposed adjacent opposite ends of the mounting block for parallel linear movement towards and away from a record surface.

7. An assembly as claimed in any one of claims 1 to 6, further characterised in that the flexible arm comprises a cantilevered tongue (42a, Figure 6) partly severed from a planar sheet by a U-shaped cut and deformed out of the plane of the sheet to lie in a plane parallel thereto.

8. An assembly as claimed in claim 7, further characterised in that the tongue (42a) is connected to the remainder of the sheet by an integral bridge, top-hat sectioned connecting portion of which the sheet forms the brim and the root of the tongue forms the cross-piece.

9. An assembly as claimed in claim 8, further characterised in that the root of the tongue is adjacent one end of the sheet so that the connecting portion extends to that end of the sheet.

**Patentansprüche**

1. Magnetkopf-Befestigungsvorrichtung zur Aufnahme eines Magnetkopfs auf einem Rahmen, um eine Zustell- und abhebbewegung des Kopfes auf ein Aufzeichnungsmedium hin und von diesem weg zu erlauben, enthaltend ein Befestigungselement (48) auf dem der Kopf zu befestigen ist, ein länglicher, flexibler freitragender Arm (42a, Fig. 6), der des Befestigungselement an oder in der Nähe des freien Endes aufnimmt, ein Trägerelement (24) an das das andere Ende des freitragenden Armes (42) befestigt ist, und ein Zustellarm (22) auf dem das Trägerelement (24) befestigt ist, dadurch gekennzeichnet, daß das Trägerelement (24) als Gleitpassung in einer Führungsausnehmung (36) im Zustellarm (22) ausgebildet ist und linear darin in der Art eines Kolbens ohne Drehung während der Zustell- und Abhebbewegungen des Kopfes sich bewegt, und dadurch, daß das Trägerelement (24) und der Zustellarm (22) durch eine Federvorrichtung (20) verbunden sind, die während der Gleitbewegungen verbogen wird.

2. Vorrichtung gemäß Anspruch 1, dadurch gekennzeichnet, daß die Federanordnung (20, Fig. 6) eine im wesentlichen U-förmig ausgestaltete Blattfeder mit zwei beabstandeten Schenkeln (26, 28) unt mit einem Querteil (30) ist, wobei die freien Enden der Schenkel mit dem Zustellarm (22) verbunden (50) sind und das Querteil (30) mit dem Trägerelement verbunden ist.

3. Vorrichtung nach Anspruch 1 oder 2, dadurch gekennzeichnet, daß die Führungsausnehmung (36) durch eine Ausnehmung oder Öffnung in dem Zustellarm verwirklicht ist.

4. Vorrichtung nach Anspruch 3, dadurch gekennzeichnet, daß der Zustellarm (22) rechteckige Querschnittsform aufweist und eine Lufteinlaßöffnung (38) enthält, die mit der Führungsausnehmung oder -öffnung (36) so ausgerichtet ist, daß bei Benutzung Luft in die Führungsausnehmung bzw. -öffnung (36) durch die Lufteinlaßöffnung (38) eindringt und das Trägerelement (24) aus der Führungsausnehmung bzw. -öffnung (36) herausdrückt.

5. Vorrichtung gemäß Anspruch 3 oder 4, dadurch gekennzeichnet, daß sich die Führungsausnehmung bzw. -öffnung (36) vollständig durch den Zustellarm (22) hindurch erstreckt,

daß ein zweites Trägerelement (Fig. 5) im anderen Ende der durchgehenden Ausnehmung bzw. -öffnung, wie in der vorbeschriebenen Weise gleitet, und

daß ein zweiter freitragender Arm und Befestigungsblock durch das zweite Trägerelement getragen wird, wodurch zwei Köpfe, die auf entgegengesetzte Seiten eines Aufzeichnungsmediums arbeiten, montiert werden können.

6. Anordnung gemäß einem der Ansprüche 1 bis 5, dadurch gekennzeichnet, daß der oder jeder Befestigungsblock (24, Fig. 6) zwei flexible freitragende Arme (42a, 42b) trägt, der jeweils ein Befestigungselement (48) trägt und so angeordnet ist, daß die zwei den Kopf tragenden Elemente in der Nähe entgegengesetzter Enden des Befestigungsblocks für parallele lineare Bewegung auf die Aufzeichnungsfläche zu und von dieser weg angeordnet sind.

7. Anordnung nach einem der Ansprüche 1 bis 6, dadurch gekennzeichnet, daß der flexible Arm eine freitragende Zunge (42a, Fig. 6) enthält, die teilweise herausgetrennt ist aus einem ebenen Blatt durch einen U-förmigen Schnitt und aus der Ebene des Blattes herausgedrückt ist, um in einer Ebene parallel dazu zu verlaufen.

8. Vorrichtung gemäß Anspruch 7, dadurch gekennzeichnet, daß die Zunge (42a) mit dem Rest des Blattes durch eine integrale Brücke verbunden ist, von denen obenliegende abgeteilte Verbindungsteile den Rand bilden und die Wurzel der Zunge das Querstück bildet.

9. Vorrichtung gemäß Anspruch 8, dadurch gekennzeichnet, daß die Wurzel der Zunge an einem Ende des Blattes liegt, so daß der Verbindungsteil sich auf das Ende des Blattes hin erstreckt.

## Revendications

1. Assemblage pour le montage d'une tête magnétique par rapport à un châssis formant support de façon à permettre à la tête d'effectuer un mouvement de va-et-vient relativement à un enregistrement, ledit ensemble comportant un élément de montage (48) sur lequel la tête doit être montée, un bras souple en porte-à-faux (42a, figure 6) portant l'élément de montage à son extrémité libre ou à proximité immédiate de celle-ci, un élément porteur (24) auquel est fixée l'autre extrémité du bras en porte-à-faux (42), et un bras de positionnement (22) auquel est fixé l'élément porteur (24), caractérisé en ce que l'élément porteur (24) est monté de manière à pouvoir glisser dans une ouverture de guidage (36) pratiquée dans la bras de positionnement (22) et glisse linéairement dans celle-ci à la façon d'un piston, sans rotation, pendant le mouvement de va-et-vient effectué par la tête et en ce que l'élément porteur (24) et le bras de positionnement (22) sont interconnectés par un ressort (20) qui fléchit pendant le glissement effectué par l'élément porteur.

2. Assemblage selon la revendication 1, caractérisé en outre en ce que le ressort (20, figure 6) est un ressort en forme d'U comportant deux branches séparées l'une de l'autre (26, 28) et reliées par une partie transversale (30), les extrémités libres desdites branches étant fixées (en 50) au bras de positionnement (22) et la partie transversale (30) étant fixée à l'élément porteur.

3. Assemblage selon la revendication 1 ou 2, caractérisé en outre en ce que l'ouverture de guidage (36) est constituée par un évidement ou un logement pratiqué dans le bras de positionnement.

4. Assemblage selon la revendication 3, caractérisé en outre en ce que le bras de positionnement (22) présente une section droite rectangulaire et comporte une ouverture (38) d'admission d'air qui coïncide avec l'ouverture de guidage (36), de telle sorte que, en cours d'utilisation, de l'air pénètre dans l'ouverture de guidage (36) par l'ouverture (38) et sollicite l'élément porteur (24) vers l'extérieur de l'ouverture de guidage (36).

5. Assemblage selon la revendication 3 ou 4, caractérisé en outre en ce que l'ouverture de guidage (36) traverse le bras de positionnement (22), en ce qu'un second élément porteur (figure 5) glisse, de la façon indiquée ci-dessus, dans l'autre extrémité de ladite ouverture, et en ce qu'un second élément porteur porte un second bras souple en porte-à-faux et un second bloc de montage de manière à permettre le montage de deux têtes destinées à agir sur des surfaces d'enregistrement opposées.

6. Assemblage selon l'une quelconque des revendications 1 à 5, caractérisé en outre en ce que chacun des blocs de montage (24, figure 6) porte deux bras souples en porte-à-faux (42a, 42b) dont chacun porte un élément de montage (48) et disposés de telle sorte que les deux éléments de montage de tête soient disposés à proximité immédiate des extrémités opposées du bloc de montage de manière à permettre des déplacements linéaires parallèles vers la surface d'un enregistrement et depuis cette dernière.

7. Assemblage selon l'une quelconque des revendications 1 à 6, caractérisé en outre en ce que le bras souple comporte une languette en porte-à-faux (42a, figure 6) partiellement détachée d'une feuille plane par une découpe en forme d'U et sortie du plan de la feuille de manière à se trouver dans un plan parallèle à celui-ci.

8. Assemblage selon la revendication 7, caractérisé en outre en ce que la languette (42a) est reliée à la partie restante de la feuille par un pont faisant partie intégrante de cette dernière et dont la section droite est analogue à un haut de forme dont la feuille elle-même constitue le bord et dont la base de la languette constitue la calotte.

9. Assemblage selon la revendication 8, caractérisé en outre en ce que la base de la languette se trouve à proximité immédiate de l'une des extrémités de la feuille de telle sorte que ledit pont s'étende jusqu'à cette extrémité.

FIG.1

PRIOR ART

FIG.2

PRIOR ART

FIG.3

FIG.4

FIG.5

1

FIG 6